# EUROPEAN PATENT SPECIFICATION

(11) **EP 3 564 080 B1**
(45) Date of publication and mention of the grant of the patent: **14.08.2024**
(21) Application number: 17886945.9
(22) Date of filing: 29.12.2017
(51) Int. Cl.: B60S 5/06, B66F 9/075, B60L 50/60, B60L 53/80, B60K 1/04

(54) **UNLOCKING DEVICE, LOCKING DEVICE, BATTERY REPLACEMENT MOBILE PLATFORM AND FAST BATTERY REPLACEMENT SYSTEM**
ENTRIEGELUNGSVORRICHTUNG, VERRIEGELUNGSVORRICHTUNG, MOBILE BATTERIEERSATZPLATTFORM UND SCHNELLBATTERIEERSATZSYSTEM
DISPOSITIF DE DÉVERROUILLAGE, DISPOSITIF DE VERROUILLAGE, PLATEFORME MOBILE DE REMPLACEMENT DE BATTERIE ET SYSTÈME DE REMPLACEMENT RAPIDE DE BATTERIE

(30) Priority: 30.12.2016 CN 201611257049; 24.01.2017 CN 201710052840
(43) Date of publication of application: 06.11.2019
(73) Proprietor: Shanghai Dianba New Energy Technology Co., Ltd., Shanghai 201308 (CN); Aulton New Energy Automotive Technology Group, Shanghai 201315 (CN)
(72) Inventor: ZHANG, Jianping, Shanghai 201308 (CN); HUANG, Chunhua, Shanghai 201308 (CN); DI, Shiyong, Shanghai 201308 (CN)
(74) Representative: Margotti, Herwig Franz
(86) International application number: PCT/CN2017/119918
(87) International publication number: WO 2018/121745

(56) References cited:
- WO-A1-2012/160407
- WO-A2-2009/125414
- CN-A- 101 214 814
- CN-A- 101 214 814
- CN-A- 102 092 366
- CN-A- 102 092 366
- CN-A- 102 180 200
- CN-A- 102 180 200
- CN-A- 102 431 526
- CN-A- 102 431 526
- CN-A- 106 494 370
- CN-U- 204 688 082
- CN-U- 204 688 082
- CN-U- 206 552 009
- CN-U- 206 552 009
- FR-A3- 2 943 970
- MISUMI: "Low Cost Automation Tutorial | Technical Tutorial - MISUMI", 2 September 2011 (2011-09-02), XP055715138, Retrieved from the Internet <URL:https://www.misumi-techcentral.com/tt/en/lca/2011/09/089-motion-mechanism-design---34-conveyor-belt-tension-mechanism.html> [retrieved on 20200715]
- MISUMI: "MSA-628 Belt Drive Actuator | MISUMI | MISUMI", 15 October 2010 (2010-10-15), XP055715164, Retrieved from the Internet <URL:https://us.misumi-ec.com/vona2/detail/110302499820/> [retrieved on 20200715]
- LESLIE LANGNAU: "When to Use a Tooth-belt Drive Actuator", 13 June 2013 (2013-06-13), XP055715157, Retrieved from the Internet <URL:https://www.designworldonline.com/when-to-use-a-tooth-belt-drive-actuator/> [retrieved on 20200715]

## Description

### FIELD

The present disclosure relates to a technical field of electric vehicles, and more particularly to an unlocking device for unlocking a battery locked to an electric vehicle, a lock device using the unlocking device, a battery replacement mobile platform using the unlocking device, and a fast battery replacement system using the battery replacement mobile platform.

### BACKGROUND

A battery of an existing electric vehicle is generally installed in a fixed way or in a replaceable way. The fixed battery is usually fixed to the vehicle, and the vehicle is directly charged during charging. The replaceable battery is usually installed in a movable manner, and the battery can be removed at any time for replacement or for charging and then be installed to the vehicle body after replacement or charging.

After being installed to the electric vehicle, the battery is generally locked to the electric vehicle by means of a locking mechanism, to avoid falling off. The battery needs to be unlocked every time it needs replacement. One battery often has a plurality of locking positions arranged symmetrically. How to realize automatic unlocking in the plurality of locking positions at the same time is a problem that needs to be solved for automatic replacement of the battery.

CN102180200A discloses an automatic vehicle-mounted mobile power charging and exchanging station for an electric vehicle and a method for quickly exchanging a battery. The automatic vehicle-mounted mobile power charging and exchanging station comprises a tractor, a semitrailer and a battery box storage rack, a battery box, an automatic power exchanging device, a charging system, an electric quantity counting system, an automatic control unit and the like which are arranged on the semitrailer, wherein the storage rack can store a plurality of battery boxes three-dimensionally; the battery boxes are standard exchanging modules connected with a battery house on the lower part of a vehicle body by using a plurality of quick-opening locking bolts; the automatic power exchanging device comprises a lifting table, a transmigration machine, a shifting machine and a plurality of unlocking/locking bushings; the automatic power exchanging device can automatically transport and store the battery boxes, and lock or unlock the battery boxes and the battery house due to mutual matching of the lifting table, the unlocking/locking bushings and the quick-opening locking bolts, so automatic dismantling and exchange of the battery boxes can be realized; and the charging system is used for automatically charging the battery boxes. The station is complete in system, compact in structure, flexible in maneuvering, low in investment and short in construction period, so the automatic power charging/exchanging requirement of the battery of the electric vehicle can be met.

CN206552009U provides a release mechanism, locking device, trade electric moving platform and quick change system, this unlocking device includes: removal portion including the guide rail, and installs on the guide rail and edge the removal seat that the guide rail removed, unlocking part sets up including perpendicular remove the unblock ejector pin of seat upper surface, the drive division, with remove seat or unlocking part and connect, be used for the drive unlocking part is in move on the guide rail. The utility model discloses a cooperation of unlocking means, drive division, the locking -lever that can control on the electric automobile moves in predetermined space, realizes automatically that electric automobile goes up the unblock of battery, makes the battery break away from electric automobile and carry out automatic change by trading electric moving platform. Whole process full automation does not need artificial interference, improves the change efficiency of battery.

Misumi: "Low Cost Automation Tutorial I Technical Tutorial - MISUMI", 2 September 2011, XP055715138 relates to a conveyor belt tension mechanism. The tension of the flat belt is generated by the tensile force from the two barrel-like flat belt pulleys held by bearing holder sets pulled toward both ends. The design of the mechanism in which tension is placed on the flat belt when the two flat belt pulleys are in parallel is a feature of the conveyor belt tension adjustment mechanism.

Misumi: "MSA-628 Belt Drive Actuator I MISUMI I MISUMI", 15 October 2010, XP055715164 illustrates drawings and specifications of belt drive actuators.

Leslie Langnau: "When to Use a Tooth-belt Drive Actuator", 13 June 2013, XP055715157 relates to a tooth-belt drive actuator, which is based on hard-anodized aluminum guide rail profiles, offering a good mating surface for the linear bearing liners.

### SUMMARY

The invention is set out in the appended set of claims.

An objective of the present disclosure is to provide an unlocking device configured to automatically unlock a battery locked to an electric vehicle, to achieve automatic replacement of the battery.

A further objective of the present disclosure is to provide a lock device using the above unlocking device.

A further objective of the present disclosure is to provide a battery replacement mobile platform using the above unlocking device.

Another further objective of the present disclosure is to provide a fast battery replacement system using the above battery replacement mobile platform.

The unlocking device according to the present disclosure includes: a moving part including a guide rail; an unlocking part configured to unlock a locking mechanism for an electric vehicle; and a drive device configured to drive the unlocking part to move on the guide rail.

In an implementation of the present disclosure, the unlocking part includes an unlocking ejector rod arranged upwards on the guide rail and movable along the guide rail; the drive device includes a driving part connected with the unlocking part.

In an implementation of the present disclosure, the moving part further includes a moving seat mounted on the guide rail and movable along the guide rail, and the unlocking ejector rod is arranged on the moving seat; preferably, the unlocking part further includes a hollow fixing cylinder perpendicularly mounted on an upper surface of the moving seat, and the unlocking ejector rod has a bottom end movably mounted in the fixing cylinder by means of an elastic member; further preferably, a strip-shaped groove extending along an axial direction of the fixing cylinder is provided in a side wall of the fixing cylinder, and the bottom end of the unlocking ejector rod is provided with a limiting member that is snapped into the strip-shaped groove and is slidable along the strip-shaped groove.

In an implementation of the present disclosure, the driving part is connected with the moving seat through a push rod, and the push rod is configured as one of an electric push rod, a hydraulic push rod, and a pneumatic push rod; preferably, the moving seat is provided with a sliding groove seat having an inner groove at an end of the moving seat adjacent to the push rod, the sliding groove seat has a side wall provided with a sliding groove extending along the guide rail, and the push rod has an end located in the groove of the sliding groove seat and at this end is provided with a fixing member snapped into the sliding groove; further preferably, the surface of the moving seat is provided with a fastening board, and the unlocking part and the sliding groove seat are mounted on the fastening board.

In an implementation of the present disclosure, the unlocking device further includes a returning device connected with the unlocking part, the returning device is configured to control the unlocking part to automatically return to an original position after moving along the guide rail, and the returning device is configured as a telescopic elastic member; and/or a sensor configured to limit a moving position of the unlocking part is provided at each end of the guide rail.

In an implementation of the present disclosure, the moving part further includes a moving seat, and the unlocking part is mounted on the moving seat; the drive device includes a drive control system, and the drive control system is connected with the unlocking part or the moving seat through a connecting member; preferably, the drive control system includes: a mounting platform; a driving part mounted on the mounting platform, and including an active drive assembly and a passive drive assembly arranged oppositely, the passive drive assembly including a conveyor belt tensioning device; and a transmission part including a conveyor belt and a connecting member, the conveyor belt being connected with the active drive assembly and the passive drive assembly, the active drive assembly being configured to drive the conveyor belt to rotate clockwise or counterclockwise, the connecting member being mounted to the conveyor belt and configured to connect a moving member, and the conveyor belt being configured to drive the moving member to reciprocate horizontally under drive of the active drive assembly.

In an implementation of the present disclosure, the active drive assembly includes a motor, a drive shaft, and a drive wheel, the motor is fixedly mounted on the mounting platform, the drive wheel is mounted on the mounting platform by means of a drive wheel bracket, and the motor is connected to the drive wheel through the drive shaft to drive the drive wheel to rotate; preferably, the passive drive assembly further includes a driven wheel mounted on the mounting platform by means of a tensioning bracket, the conveyor belt has two ends fitted over a surface of the drive wheel and a surface of the driven wheel respectively, and the conveyor belt is tensioned by the drive wheel and the driven wheel; further preferably, the motor is configured as a micro-motor, the drive wheel and the driven wheel are synchronous pulleys, the conveyor belt has an inner surface provided with a rack, and the rack meshes with surfaces of the synchronous pulleys.

In an implementation of the present disclosure, the connecting member is configured as a U-shaped plate having opposite side plates and a bottom plate between the side plates, a width between the side plates is greater than a width of the conveyor belt, the U-shaped plate has an opening facing downwards and is mounted on the conveyor belt in a suspended manner; and the opposite side plates of the U-shaped plate are each provided with a snap groove configured to connect the moving member; preferably, the conveyor belt is a detachable conveyor belt, two detachable ends of the conveyor belt are each provided with a belt mounting hole, the bottom plate of the U-shaped plate is provided with bottom plate mounting holes at corresponding positions, and a screw passes through the bottom plate mounting hole and the belt mounting hole to connect and fix the U-shaped plate and the conveyor belt; further preferably, the connecting member further includes a rack belt provided on the other side of the conveyor belt opposite to the U-shaped plate, the rack belt is provided with a rack belt mounting hole at a corresponding position to the belt mounting hole in the conveyor belt, and a screw passes through the bottom plate mounting hole of the U-shaped plate, the belt mounting hole, and the rack belt mounting hole in the rack belt sequentially to mount and fix the conveyor belt and the connecting member.

In an implementation of the present disclosure, the control system further includes a limit sensor mounted on the mounting platform via a bracket, limit sensors are provided at two extreme positions for movement of the connecting member, and the limit sensors are connected to the driving part to control the extreme positions for the movement of the connecting member.

In an implementation of the present disclosure, the conveyor belt tensioning device includes: a tensioning bracket movably mounted on the mounting platform and having a first end configured to mount the conveyor belt; and a tension adjusting part mounted at a second end of the tensioning bracket, elastically connected to the tensioning bracket, and configured to adjust tension of the conveyor belt; preferably, the tensioning bracket has a bottom plate movably mounted on the mounting platform, and an end plate on the other end of the bottom plate away from a mounting end of the conveyor belt; the tension adjusting part includes a fixing plate, a limiting plate, a penetrating member, and an elastic member; the fixing plate is provided outside the tensioning bracket and to the mounting platform at a side of the end plate; the limiting plate is provided to the mounting platform inside the tensioning bracket through a limiting opening in the bottom plate; two ends of the penetrating member are respectively fixed to the limiting plate and the fixing plate and penetrate the end plate; the elastic member is provided to a part of the penetrating member between the limiting plate and the end plate and presses the limiting plate and the end plate at both ends; further preferably, the penetrating member includes a screw and a nut; the screw penetrates the limiting plate, the end plate, and the fixing plate, and the nut is mounted at a penetrating end; the elastic member is configured as a spring; and/or the tensioning bracket is provided with a side plate on each of two sides of the bottom plate; the conveyor belt has a first end mounted to the side plate of the tensioning bracket through a gear, and a second end connected to a drive wheel.

In an implementation of the present disclosure, the bottom plate of the tensioning bracket is further provided with a sliding slot extending along a length of the conveyor belt, and a slot screw passing through the sliding slot to be mounted to the mounting platform, a width of a head of the slot screw being greater than a width of the sliding slot.

In an implementation of the present disclosure, the moving seat is provided with a snap strip, and the unlocking device is inserted into a snap groove of the connecting member by means of the snap strip, so as to be connected to the drive control system; preferably, the snap groove has a width extending in a horizontal direction, and the width of the snap groove is greater than a width of the snap strip to allow the snap strip to move horizontally in a width range of the snap groove.

The lock device according to the present disclosure includes: a locking mechanism including: a lock base and a lock connecting rod, the lock base being configured to provide a locking point and having a lock slot into which a component to be locked is inserted, the lock connecting rod being movably connected with the lock base through a lock tongue, and the lock tongue having a stop block configured to prevent the component to be locked from separating from the lock slot after the component to be locked being inserted into the lock slot; and an unlocking mechanism including the above-described unlocking device, the unlocking ejector rod of the unlocking device being configured to push the lock connecting rod, and the lock connecting rod causing the lock tongue to rotate during rise so as to move the stop block away from its locked position.

The battery replacement mobile platform according to the present disclosure includes: a travel driving part configured to drive the whole battery replacement mobile platform to move on the ground; a lifting part mounted on the travel driving part and configured to realize rise and fall of a battery during a battery replacement process; and a battery mounting part mounted on a top of the lifting part and configured to place thereon a replacement battery or a replaced battery, the battery mounting part having an upper surface provided with the above-described unlocking device to unlock a battery locking mechanism of the electric vehicle under control of the drive device.

The fast battery replacement system according to the present disclosure includes: a battery rack configured to place thereon a replacement battery of an electric vehicle and a battery to be charged and removed from the electric vehicle; a stacker configured to put the battery to be charged into the battery rack and remove the replacement battery from the battery rack; and the above-described battery replacement mobile platform.

The beneficial effects of the present disclosure lie in that: through the cooperation among the unlocking part, the drive device, and the returning device, a locking rod can be controlled to act in a predetermined space, and the battery of the electric vehicle can be automatically unlocked, such that the battery is separated from the electric vehicle and automatically replaced by the battery replacement mobile platform. The entire process is fully automated, eliminating the need for manual intervention and improving the battery replacement efficiency. According to the present disclosure, the battery rack, the stacker, and the battery replacement mobile platform constitute a complete electric vehicle automatic fast battery replacement system, which can realize the fast battery replacement line work for multiple electric vehicles. During replacement, as long as the electric vehicle is parked at a designated position, the battery can be automatically replaced within five to ten minutes. The entire replacement process does not require manual intervention, thereby reducing labor intensity and greatly improving the replacement efficiency. The drive control system according to the present disclosure has a compact structure, quick unlocking ability and good reliability, and is particularly suitable for use in electric vehicles.

### BRIEF DESCRIPTION OF THE DRAWINGS

Fig. 1 illustrates a schematic view of a fast battery replacement system according to an implementation of the present disclosure.
Fig. 2 illustrates a schematic view of a battery replacement mobile platform shown in Fig. 1.
Fig. 3 illustrates a schematic view of an unlocking device according to an implementation of the present disclosure.
Fig. 4 illustrates a perspective view of Fig. 3.
Fig. 5 illustrates a perspective view of a drive control system according to the present disclosure.
Fig. 6 illustrates a perspective exploded view of the drive control system in Fig. 5.
Fig. 7 further illustrates a perspective exploded view of the drive control system in Fig. 6.
Fig. 8 illustrates a partial perspective view of the drive control system in Fig. 7.
Fig. 9 illustrates a partial perspective view of the drive control system in Fig. 7.

### DETAILED DESCRIPTION

The present disclosure will be further illustrated by the following embodiments, but shall not be limited to the scope of the illustrated embodiments.

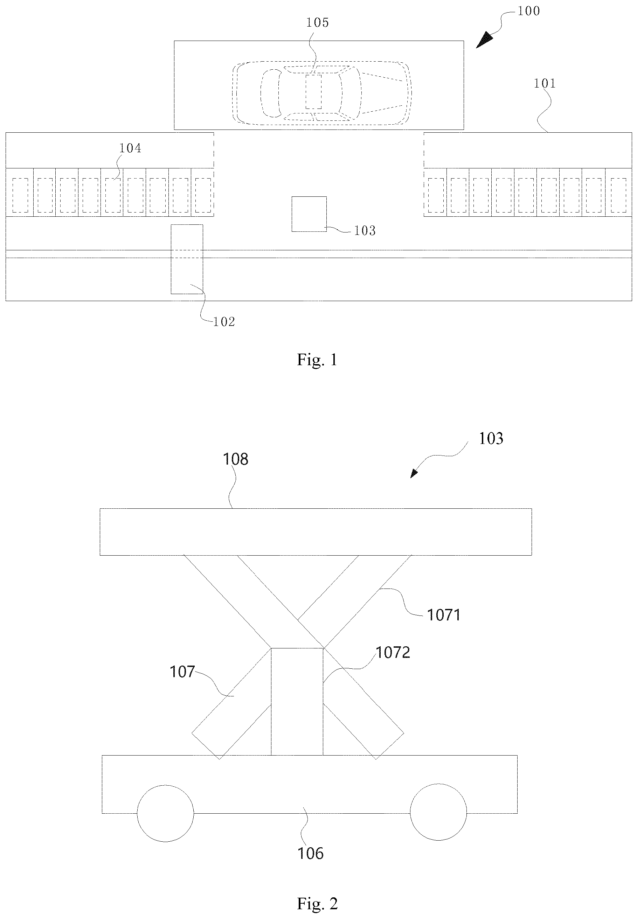

As illustrated in Fig. 1, a fast battery replacement system 100 according to an implement of the present disclosure generally includes a battery rack 101 for a battery 104 to be placed, a stacker 102, and a battery replacement mobile platform 103.

The battery 104 placed on the battery rack 101 includes a replacement battery for an electric vehicle 105, and a battery to be charged and removed from the electric vehicle 105. The battery rack 101 is provided with a plurality of placement layers constituted by a frame.

The battery replacement mobile platform 103 is configured to remove the battery to be charged from the electric vehicle 105 and transport the battery to be charged to the stacker 102, and meanwhile, the replacement battery can be received by the stacker 102 and mounted to the electric vehicle 105. The battery replacement mobile platform 103 includes a lifting device that can travel and raise or lower the battery 104, and a battery mounting part mounted on the lifting device and configured to automatically remove the battery to be charged from the electric vehicle 105 or automatically mount the replacement battery to the electric vehicle 105.

The stacker 102 is configured to place the battery to be charged and removed by the battery replacement mobile platform 103 into the battery rack 101, and pick the replacement battery off the battery rack 101 to place it on the battery replacement mobile platform 103. The stacker 102 realizes movement in a horizontal direction and in a vertical direction with respect to the battery rack 101 by means of a track, and includes a telescopic bracket that is extendable to pick off or place the battery 104.

In operation, the battery rack 101, the stacker 102, and the battery replacement mobile platform 103 constitute a complete electric vehicle automatic fast battery replacement system, which can realize the fast battery replacement line work for multiple electric vehicles. During replacement, as long as the electric vehicle is parked at a designated position, the battery can be automatically replaced within five to ten minutes. The entire replacement process does not require manual intervention, thereby reducing labor intensity and greatly improving replacement efficiency.

As illustrated in Fig. 2, the battery replacement mobile platform 103 according to an implementation of the present disclosure generally includes a lifting part 107, a battery mounting part 108, and a travel driving part 106.

The travel driving part 106 is configured to drive the entire apparatus to move during the pick-and-place process and replacement process of the battery 104. Specific driving manners may include existing winch driving, rack-and-pinion driving, roller driving, track driving, and any other manners capable of realizing the movement of the battery replacement mobile platform 103.

The lifting part 107 is mounted on the travel driving part 106 and configured to achieve control over the rise or fall of the battery 104 at the bottom of the electric vehicle 105 during the replacement of the battery 104. The lifting part 107 includes a lifting device 1071 capable of rising or falling in the vertical direction, and a lift driving part 1072 configured to drive the lifting device 1071 to rise or fall. Specifically, the lifting device 1071 may be an articulated telescopic rod structure, a guide rail structure, a telescopic tube structure, or any existing structure that can be stretched in the vertical direction. The lift driving part 1072 may be conventional power, such as a hydraulic drive, an electric drive, or a pneumatic drive.

The battery mounting part 108 is arranged on the top of the lifting device 1071 and configured to place the replacement battery or the battery to be charged. The battery mounting part 108 is equipped with an unlocking device on an upper surface thereof, and the unlocking device unlocks a battery locking mechanism of the electric vehicle under the control of a corresponding drive device, thereby realizing automatic detachment and locking of the battery 104 from or to the electric vehicle 105.

In this implementation, the battery replacement mobile platform 103 is moved to the bottom of the electric vehicle 105 under the control of the travel driving part 106, and the lifting device 1071 is driven to rise by means of the lift driving part 1072, to enable the unlocking device on the battery mounting part 108 to come into contact with the battery locking mechanism in a battery mounting seat at the bottom of the electric vehicle 105, so as to release the battery to be charged from a locked state. Then, the battery mounting part 108 is controlled to move in the horizontal direction to separate the unlocked battery to be charged from the electric vehicle and make it directly fall onto the battery mounting part 108. The lift driving part 1072 controls the lifting device 1071 to fall, the travel driving part 106 drives the battery replacement mobile platform 103 to move to the battery rack 101, the battery to be charged is removed by the stacker 102, and the replacement battery is replaced at the same time. The travel driving part 106 drives the battery replacement mobile platform 103 to move back to the bottom of the electric vehicle 105, and the lifting device 1071 is driven to rise by means of the lift driving part 1072, such that the battery mounting part 108 snaps the replacement battery into the battery mounting seat of the electric vehicle 105, and the battery mounting part 108 is then translated to lock the replacement battery in the battery mounting seat. The battery mounting part 108 is lowered through the lifting device 1071 by means of the lift driving part 1072, and the travel driving part 106 moves the battery replacement mobile platform 103 out of the bottom of the electric vehicle 105. Till now, the automatic fast battery replacement process for one electric vehicle 105 is completed.

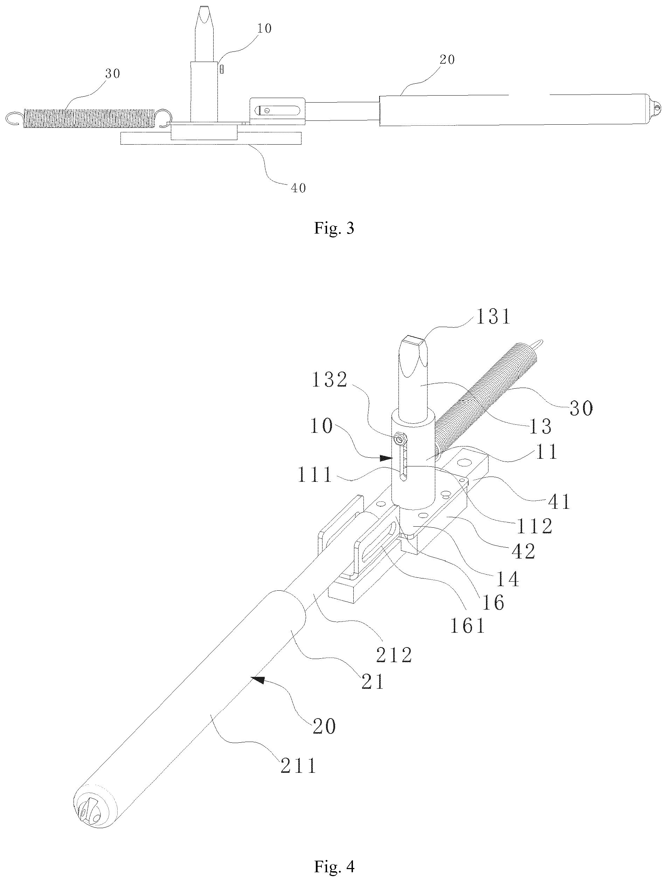

As illustrated in Fig. 3, the unlocking device according to an implementation of the present disclosure generally includes a moving part 40, including a guide rail and a moving seat mounted on the guide rail and movable along the guide rail; an unlocking part 10, including an unlocking ejector rod vertically arranged on the moving seat; and a drive device configured to drive the unlocking part to move on the guide rail. The drive device specifically includes a driving part 20 connected with the unlocking part 10, and the driving part 20 includes a push rod connected with the moving seat and configured to drive the moving seat to move along the guide rail.

In this implementation, the unlocking device needs to come into contact with the battery locking mechanism in the battery mounting seat at the bottom of the electric vehicle, so as to unlock the battery locking mechanism, and can be mounted to a battery-replacement apparatus to perform the battery replacement at the same of unlocking. The battery-replacement apparatus may be the battery mounting part 108 of the battery replacement mobile platform 103.

Before the battery replacement, the driving part 20 drives the unlocking part 10 to move horizontally on a surface of the battery mounting part 108 and finally stay at a position corresponding to a unlocking point of the battery locking mechanism of the electric vehicle 105, and drives the battery replacement mobile platform 103 to rise, such that the unlocking ejector rod of the unlocking part 10 comes in contact with the unlocking point in the locking mechanism during the rise and jacks up the unlocking point to accomplish the unlocking.

Through the cooperation among the unlocking part 10, the driving part 20, and the moving part 40, the unlocking ejector rod can be controlled to move in a predetermined track, and the battery to be charged can be automatically unlocked from the electric vehicle, so that the battery to be charged is separated from the electric vehicle and is automatically replaced by the battery replacement mobile platform 103. The whole process is completely automated without manual intervention, thereby improving the battery replacement efficiency of the electric vehicle.

As illustrated in Fig. 4, the moving part 40 is used to mount the unlocking part 10. By means of the moving part 40, the unlocking part 10 will not deviate from the track while moving, and the movement of the unlocking part 10 can become easier. In another implementation, the moving part 40 may be a sliding mechanism, which can include a guide rail 41 fixed at a fixing point, and a moving seat 42 slidably mounted on the guide rail 41, and the unlocking part 10 is fixed on the moving seat 42. The driving part 20 can drive the moving seat to move through the movement of the push rod, thereby controlling the unlocking part 10 to move on the guide rail 41. The moving seat 42 can be directly used as a part of the unlocking part 10 or can only serve as a base for mounting the unlocking part 10. In other implementations, the sliding mechanism may also be replaced by other conventional moving means, such as rollers, chains, conveyor belts, and the like.

In an implementation of the present disclosure, the unlocking part 10 can further include a hollow fixing cylinder 11 that is perpendicularly mounted on a surface of the moving seat 42. A bottom end of the unlocking ejector rod 13 is movably mounted in the fixing cylinder 11 and cannot separate. The fixing cylinder 11 is provided with a spring 112 that applies a thrust to the unlocking ejector rod 13. The spring 112 can apply an elastic force to the unlocking ejector rod to keep it at an unfixed end of the fixing cylinder. When the unlocking ejector rod comes in contact with the battery locking mechanism at the bottom of the electric vehicle, the unlocking ejector rod can be retracted into the fixing cylinder in a case of an impact force greater than a predetermined value (the elastic force of the spring), thereby protecting the unlocking ejector rod and the battery locking mechanism from damage due to hard contact.

The movable installation manner of the unlocking ejector rod 13 and the fixing cylinder 11 can adopt the following structure:
A retaining ring or a retaining block protruding towards a circle center of the fixing cylinder 11 is provided at the unfixed end of the fixing cylinder 11, and a limiting table having a diameter larger than a diameter of the retaining ring or the retaining block and smaller than or equal to an inner diameter of the fixing cylinder 11 may be provided at a bottom of the unlocking ejector rod 13. An upper end of the unlocking ejector rod 13 can pass through a hole surrounded by the retaining ring or the retaining block. When the unlocking ejector rod 13 is lifted by the spring, the unlocking ejector rod is restrained in the fixing cylinder 11 by means of the limiting table at the bottom end.

Further, in an implementation of the present disclosure, the movable installation manner of the unlocking ejector rod 13 and the fixing cylinder 11 can also adopt the following structure. A strip-shaped groove 111 extending along an axial direction of the fixing cylinder 11 is provided in a side wall of the fixing cylinder 11, and the bottom end of the unlocking ejector rod 13 is provided with a limiting member 132 that is snapped into the strip-shaped groove 111 and is able to slide up and down along the strip-shaped groove 111 under the action of the elastic force of the spring 112. The limiting member 132 and the strip-shaped groove 111 together define the highest position for the movement of the unlocking ejector rod 13. Specifically, the limiting member 132 can be configured as a screw and a nut, in which the screw passes through the strip-shaped groove 111 and is screwed into a threaded hole in the unlocking ejector rod 13, and the nut is screwed onto an end of the screw exposed out of the strip-shaped groove 111. An end of the unlocking ejector rod 13 outside the fixing cylinder 11 can be configured as a retractable tapered end 131 that matches a shape of an unlocking point mechanism in the battery locking mechanism, such that stable contact is established during the movement, and no jamming will occur. The unlocking ejector rod 13 can be freely compressed into the fixing cylinder 11 when subjected to external pressure. When the external pressure is removed, the spring 112 can cause the unlocking ejector rod 13 to protrude out of the fixing cylinder 11 all the time.

In an implementation of the present disclosure, the push rod 21 of the driving part 20 may be one of an electric push rod, a hydraulic push rod, and a pneumatic push rod. The driving part 20 can also include a power unit that provides corresponding power to the corresponding push rod 21, such as a hydraulic pump, a pneumatic pump, or a servo motor (not illustrated). In the present disclosure, an electric push rod is used to push the unlocking part 10 to move. The electric push rod has a cylinder block 211 fixed at a fixing point (such as at the battery mounting part 108), and is connected to the unlocking part 10 through a piston rod 212, such that the horizontal movement of the unlocking part 10 is achieved by extension and retraction of the piston rod 212.

In an implementation of the present disclosure, the moving seat 42 is further provided with a sliding groove seat 16 and a sliding groove 161. The sliding groove seat 16 is located on a side connected with the push rod 21, and the sliding groove 161 is located in the sliding groove seat 16 and extends along a telescopic direction of the push rod 21. The push rod 21 is provided with a fixing member that is snapped into the sliding groove 161 and that can slide along the sliding groove 161 as the push rod 21 moves. The driving part 20 drives the push rod 21 to extend and retract in the horizontal direction. The fixing member located on the push rod 21 slides in the sliding groove 161, and drives the sliding groove seat 16 and the moving seat 42 to move accordingly after sliding to an extreme position of the sliding groove 161, thereby realizing the horizontal movement of the unlocking part 10 on the guide rail. Specifically, two sliding grooves 161 can be provided and arranged oppositely in the sliding groove seat 13. The piston rod 212 of the electric push rod is located in the sliding groove seat 16, and the fixing member can pass through a through hole in the piston rod 212 and be snapped into the two sliding groove.

In an implementation of the present disclosure, the unlocking part 10 and the sliding groove seat 16 can be fixedly mounted on the moving seat 42 by a fastening board 14. In the present implementation, the fastening board 14 is fixedly connected to the moving seat 42, and the moving seat 42 may directly act as the fastening board 14. Further, in order to make a force applied by the push rod 21 to the sliding groove seat 16 more evenly, specifically, the sliding groove seat 16 may be formed by directly bending the fastening board 14.

In an implementation of the present disclosure, the unlocking device can further include a returning device 30 configured to control automatic return of the unlocking part. The returning device 30 is mounted on a side of the unlocking part 10 opposite to the driving part 20, that is, a side of the guide rail 41 opposite to the push rod 21. After the unlocking part 10 finishes an unlocking operation, the unlocking part 10 is pulled back to the original resting position by the returning device 30. The returning device 30 may be an apparatus identical to the driving part 20, or may be a passive elastic member structure, such as a spring. In addition, in other implementations, the return of the unlocking part 10 can also be realized by the driving part 20, that is, after the driving part moves the unlocking part 10, the driving part again pulls the unlocking part 10 back to the original position.

In an implementation of the present disclosure, the unlocking device can further include a position sensor. Two position sensors are provided at two ends of the guide rail 41 to define a position to which the moving seat 42 can move. When the position sensor senses the moving seat 42, the moving seat 42 stops moving.

An implementation of the present disclosure discloses a lock device including a locking mechanism and an unlocking mechanism. The locking mechanism includes a lock base and a lock connecting rod that are to be mounted to the electric vehicle. The lock base is used to provide a locking point, and has a lock slot into which a lock shaft of a battery pack is inserted. The lock connecting rod is movably connected with the lock base through a lock tongue, and the lock tongue has a stop block configured to prevent the lock shaft from separating from the lock slot after the lock shaft is inserted into the lock slot. The unlocking mechanism includes the unlocking device described in the foregoing implementations, and the unlocking ejector rod 13 in the unlocking device is used to push the lock connecting rod to drive the lock tongue to rotate in the lock base.

Before the battery replacement, the push rod 21 drives the unlocking ejector rod 13 to move along the guide rail 41, so that the unlocking ejector rod 13 is aligned with a corresponding position on the lock connecting rod. The spring 112 at the bottom of the unlocking ejector rod 13 can keep the unlocking ejector rod 13 abutting against the lock connecting rod, the lock connecting rod moves horizontally when it is lifted up and moving upwards, and the unlocking part 10 moves horizontally on the guide rail 41 along with the moving seat 42. In the entire unlocking process, the unlocking ejector rod 13 and the lock connecting rod are always in contact. The upward and horizontal movement of the lock connecting rod causes the lock tongue in the lock base to rotate accordingly, and the stop block that originally closes a passage of the lock slot rotates away from the lock slot along with the lock tongue, thereby opening the passage of the lock slot, that is, realizing the unlocking of the locking mechanism. After the unlocking, by moving the battery, the lock shaft on the battery can be removed from the lock slot to separate the battery from the vehicle body, thereby realizing the detachment of the battery.

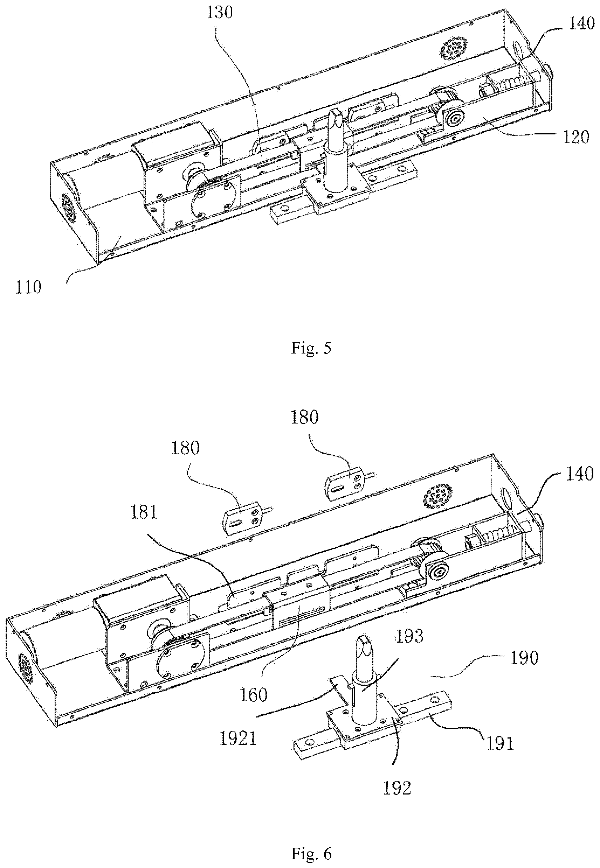

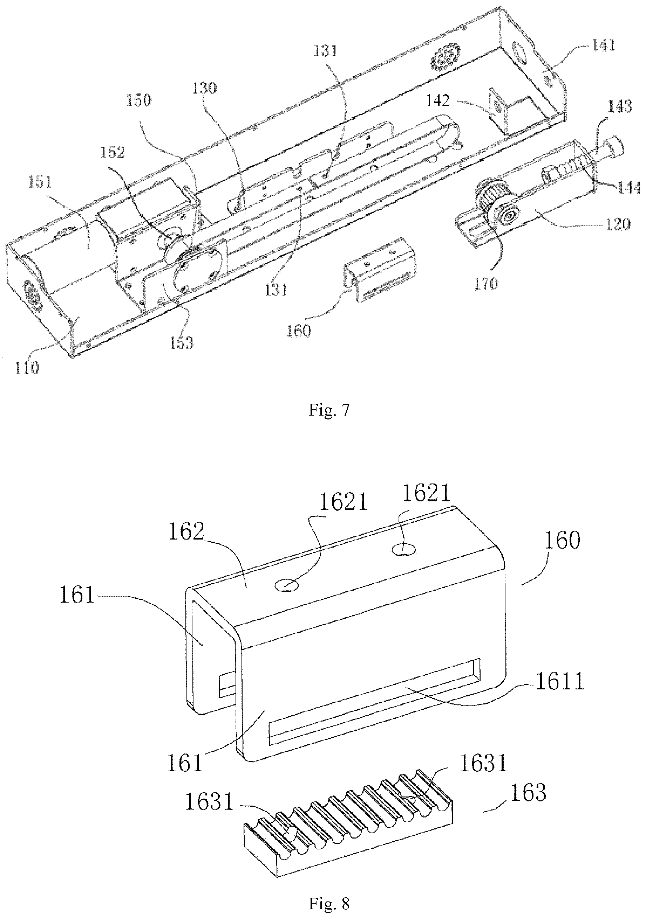

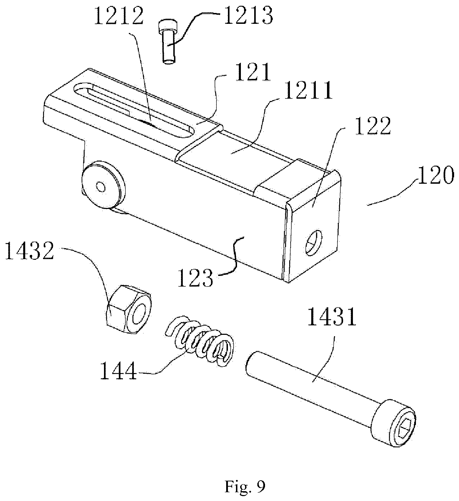

As illustrated in Figs. 5-9, the drive control system includes a mounting platform 110 on which a tensioning bracket 120 is provided. An end of the tensioning bracket 120 is used to mount a conveyor belt 130.

A tension adjusting part 140 is mounted at the other end of the tensioning bracket 120, and the tension adjusting part 140 is elastically connected to the tensioning bracket 120 and configured to adjust tension of the conveyor belt 130.

The tensioning bracket 120 has a bottom plate 121 movably mounted on the mounting platform 110, and an end plate 122 on the other end of the bottom plate 121 away from a mounting end of the conveyor belt 130. The tension adjusting part 140 includes a fixing plate 141, a limiting plate 142, a penetrating member 143, and an elastic member 144.

The fixing plate 141 is provided outside the tensioning bracket 120 and to the mounting platform 110 at a side of the end plate. The limiting plate 142 is provided to the mounting platform 110 inside the tensioning bracket 120 through a limiting opening 1211 in the bottom plate 121. Two ends of the penetrating member 143 are respectively fixed to the limiting plate 142 and the fixing plate 141 and penetrate the end plate 122. The elastic member 144 is provided to a part of the penetrating member 143 between the limiting plate 142 and the end plate 122 and presses the limiting plate 142 and the end plate 122 at both ends.

The penetrating member 143 includes a screw 1431 and a nut 1432. The screw 1431 penetrates the limiting plate 142, the end plate 122, and the fixing plate 141, and the nut 1432 is mounted at a penetrating end. The elastic member 144 is configured as a spring.

The tensioning bracket 120 is provided with a side plate 123 on each of two sides of the bottom plate 121. The conveyor belt 130 has a first end mounted to the side plate 123 of the tensioning bracket 120 through a gear, and a second end connected to a drive wheel 150.

The bottom plate 121 of the tensioning bracket 120 is further provided with a sliding slot 1212 extending along a length of the conveyor belt, and a slot screw 1213 passing through the sliding slot 1212 to be mounted to the mounting platform 110. The width of a head of the slot screw 1213 is greater than the width of the sliding slot 1212.

The drive control system includes an active drive assembly and a passive drive assembly. The active drive assembly includes a motor 151, a drive shaft 152, and the drive wheel 150. The motor 151 is fixedly mounted on the mounting platform 110. The drive wheel 150 is mounted on the mounting platform 110 by means of a drive wheel bracket 153. The motor 151 is connected to the drive wheel 150 through the drive shaft 152 to drive the drive wheel 150 to rotate. The passive drive assembly further includes a driven wheel 170 mounted on the mounting platform 110 by means of the tensioning bracket 120. Two ends of the conveyor belt 130 are fitted over a surface of the drive wheel 150 and a surface of the driven wheel 170 respectively, and are tensioned by the drive wheel 150 and the driven wheel 170.

The drive control system further includes a transmission part including the conveyor belt 130 and a connecting member 160. The conveyor belt 130 is connected to the active drive assembly and the passive drive assembly. The active drive assembly drives the conveyor belt to rotate clockwise or counterclockwise. The connecting member 160 is mounted to the conveyor belt 130 and configured to connect a moving member. The conveyor belt 130 drives the moving member to reciprocate horizontally under the drive of the active drive assembly.

The connecting member 160 is configured as a U-shaped plate having opposite side plates 161 and a bottom plate 162 between the side plates. The width between the side plates is greater than the width of the conveyor belt. The U-shaped plate has an opening facing downwards and is mounted on the conveyor belt in a suspended manner. The opposite side plates 161 of the U-shaped plate are each provided with a snap groove 1611 for connecting the moving member.

The conveyor belt 130 is a detachable conveyor belt. Two detachable ends of the conveyor belt 130 are each provided with a belt mounting hole 131, and the bottom plate 162 of the U-shaped plate is provided with bottom plate mounting holes 1621 at corresponding positions. A screw passes through the bottom plate mounting hole 1621 and the belt mounting hole 131 to connect and fix the U-shaped plate 160 and the conveyor belt 130.

The connecting member 160 further includes a rack belt 163 provided on the other side of the conveyor belt opposite to the U-shaped plate. The rack belt is provided with a rack belt mounting hole 1631 at a corresponding position to the belt mounting hole 131 in the conveyor belt. A screw passes through the bottom plate mounting hole 1621 of the U-shaped plate, the belt mounting hole 131, and the rack belt mounting hole 1631 in the rack belt sequentially to mount and fix the conveyor belt 130 and the connecting member 160.

The motor is configured as a micro-motor. The drive wheel and the driven wheel are synchronous pulleys. The conveyor belt has an inner surface provided with a rack, and the rack meshes with surfaces of the synchronous pulleys. The rack belt 163 meshes with the rack on the surface of the conveyor belt 130. The conveyor belt is clamped from both sides of the conveyor belt by the rack belt 163 and the bottom plate 162 of the U-shaped plate.

The control system further includes a limit sensor 180 mounted on the mounting platform 110 via a bracket 181. Limit sensors 180 are provided at two extreme positions for the movement of the connecting member 160, and the limit sensors 180 are connected to the driving part to control the extreme positions for the movement of the connecting member 160.

As illustrated in Fig. 6, the unlocking device includes the above-described drive control system, and further includes a moving part 190 and an unlocking part 193.

The moving part 190 includes a moving guide rail 191 and a moving seat 192. The unlocking part 193 is mounted on the above-described moving seat 192, and configured to unlock the locking mechanism of the electric vehicle. The unlocking part 193 is movable on the guide rail 91.

The moving seat 192 is provided with a snap strip 1921, and the unlocking device is inserted into the snap groove 1611 of the connecting member by means of the snap strip 1921, so as to be connected to the drive control system.

The snap groove 1611 has a width extending in the horizontal direction, and the width of the snap groove 1611 is greater than the width of the snap strip 1921, to allow the snap strip 1921 to move horizontally in a width range of the snap groove.

A working process of the drive control system will be described below.

When the motor 151 drives the drive wheel 150 to rotate, the conveyor belt is driven to run leftwards, and the unlocking part 193 is moved leftwards by the connecting member 160. When the limit sensor 180 detects the unlocking part 193, the motor 151 is stopped. At this time, the snap strip 1921 of the unlocking part 193 unlocks a lock of the battery pack of the vehicle by the weight of the vehicle. During this unlocking process, the snap groove 1611 in the connecting member 160 causes the unlocking part 193 to freely move along a trajectory of the locking mechanism, thereby unlocking the lock of the battery pack.

When the battery pack is unlocked, the motor 151 is driven to rotate reversely by a software command, thereby causing the unlocking part 190 to move rightwards. When the other limit sensor 180 detects the unlocking part 190, the motor 151 is stopped. At this position, the unlocking part 190 is in an averted position when the battery pack is removed after unlocking.

In addition, by using the elastic member 144, when the conveyor belt 130 is elongated due to fatigue, the spring 144 compressed between the limiting plate 142 and the end plate 122 of the driven wheel bracket pushes the tensioning bracket 120 to move towards the fixing plate 141. When an elastic force of the spring 144 is balanced with the tension of the conveyor belt, the conveyor belt 130 is restored to a tensioned state. When the motor is subjected to an abnormal load, the elastic member 144 is used to allow the conveyor belt 130 to skip teeth automatically, thereby protecting the motor.

The lock device of this embodiment is substantially identical to the lock device of the first embodiment, except that the unlocking mechanism of the present embodiment includes the unlocking device of this embodiment. The battery replacement mobile platform of this embodiment is substantially the same as the battery replacement mobile platform of the first embodiment, except that the unlocking device of this embodiment is mounted on the upper surface of the battery mounting part of the battery replacement mobile platform of this embodiment. The fast battery replacement system of this embodiment is substantially the same as the fast battery replacement system of the first embodiment, except that the fast battery replacement system of this embodiment includes the battery replacement mobile platform of this embodiment.

## Claims

1. An unlocking device, comprising:
a moving part (40, 190) comprising a guide rail (41, 191);
an unlocking part (10, 193) configured to unlock a locking mechanism for an electric vehicle (105); and
a drive device configured to drive the unlocking part (10, 193) to move on the guide rail (41, 191),
wherein the unlocking part (10) comprises an unlocking ejector rod (13) arranged upwards on the guide rail (41) and movable along the guide rail (41);
wherein he moving part (40) further comprises a moving seat (42) mounted on the guide rail (41) and movable along the guide rail (41), and the unlocking ejector rod (13) is arranged on the moving seat (42);
wherein the unlocking part (10) further comprises a hollow fixing cylinder (11) perpendicularly mounted on an upper surface of the moving seat (42),
**characterized in that** the unlocking ejector rod (13) has a bottom end movably mounted in the fixing cylinder (11) by means of an elastic member.

2. The unlocking device according to claim 1, **characterized in that** the drive device comprises a driving part (20) connected with the unlocking part (10).

3. The unlocking device according to claim 2, **characterized in that** a strip-shaped groove (111) extending along an axial direction of the fixing cylinder (11) is provided in a side wall of the fixing cylinder (11), and the bottom end of the unlocking ejector rod (13) is provided with a limiting member (132) that is snapped into the strip-shaped groove (111) and is slidable along the strip-shaped groove (111).

4. The unlocking device according to claim 3, **characterized in that** the driving part (20) is connected with the moving seat (42) through a push rod (21), and the push rod (21) is configured as one of an electric push rod, a hydraulic push rod, and a pneumatic push rod;
preferably, the moving seat (42) is provided with a sliding groove seat (16) having an inner groove at an end of the moving seat (42, 192) adjacent to the push rod (21), the sliding groove seat (16) has a side wall provided with a sliding groove (161) extending along the guide rail (41), and the push rod (21) has an end located in the inner groove of the sliding groove seat (16) and at this end is provided with a fixing member snapped into the sliding groove (161);
further preferably, a surface of the moving seat (42) is provided with a fastening board (14), and the unlocking part (10) and the sliding groove seat (16) are mounted on the fastening board (14).

5. The unlocking device according to any one of claims 2 to 4, **characterized in that** the unlocking device further comprises a returning device (30) connected with the unlocking part (10), the returning device (30) is configured to control the unlocking part (10) to automatically return to an original position after moving along the guide rail (41), and the returning device (30) is configured as a telescopic elastic member; and/or
a sensor configured to limit a moving position of the unlocking part (10) is provided at each end of the guide rail (41).

6. The unlocking device according to claim 1, **characterized in that** the moving part (190) further comprises a moving seat (192), and the unlocking part (193) is mounted on the moving seat (192);
the drive device comprises a drive control system, and the drive control system is connected with the unlocking part (193) or the moving seat (192) through a connecting member (160);
preferably, the drive control system comprises:
a mounting platform (110);
a driving part (20) mounted on the mounting platform (110), and comprising an active drive assembly and a passive drive assembly arranged oppositely, the passive drive assembly comprising a conveyor belt tensioning device; and
a transmission part comprising a conveyor belt (130) and the connecting member (160), the conveyor belt (130) being connected with the active drive assembly and the passive drive assembly, the active drive assembly being configured to drive the conveyor belt (130) to rotate clockwise or counterclockwise, the connecting member (160) being mounted to the conveyor belt (130) and configured to connect a moving member, and the conveyor belt (130) being configured to drive the moving member to reciprocate horizontally under drive of the active drive assembly.

7. The unlocking device according to claim 6, **characterized in that** the active drive assembly comprises a motor (151), a drive shaft (152), and a drive wheel (150), the motor (151) is fixedly mounted on the mounting platform (110), the drive wheel (150) is mounted on the mounting platform (110) by means of a drive wheel bracket (153), and the motor (151) is connected to the drive wheel (150) through the drive shaft (152) to drive the drive wheel (150) to rotate;
preferably, the passive drive assembly further comprises a driven wheel (170) mounted on the mounting platform (110) by means of a tensioning bracket (120), the conveyor belt (130) has two ends fitted over a surface of the drive wheel (150) and a surface of the driven wheel (170) respectively, and the conveyor belt (130) is tensioned by the drive wheel (150) and the driven wheel (170);
further preferably, the motor (151) is configured as a micro-motor, the drive wheel (150) and the driven wheel (170) are synchronous pulleys, the conveyor belt (130) has an inner surface provided with a rack, and the rack meshes with surfaces of the synchronous pulleys.

8. The unlocking device according to claim 6, **characterized in that** the connecting member (160) is configured as a U-shaped plate having opposite side plates (161) and a bottom plate (162) between the side plates (161), a width between the side plates (161) is greater than a width of the conveyor belt (130), the U-shaped plate has an opening facing downwards and is mounted on the conveyor belt (130) in a suspended manner; and the opposite side plates (161) of the U-shaped plate are each provided with a snap groove (1611) configured to connect the moving member;
preferably, the conveyor belt (130) is a detachable conveyor belt, two detachable ends of the conveyor belt (130) are each provided with a belt mounting hole (131), the bottom plate (162) of the U-shaped plate is provided with bottom plate mounting holes (1621) at corresponding positions, and a screw passes through the bottom plate mounting hole (1621) and the belt mounting hole (131) to connect and fix the U-shaped plate and the conveyor belt (130);
further preferably, the connecting member (160) further comprises a rack belt (163) provided on the other side of the conveyor belt (130) opposite to the U-shaped plate, the rack belt (163) is provided with a rack belt mounting hole (1631) at a corresponding position to the belt mounting hole (131) in the conveyor belt (130), and a screw passes through the bottom plate mounting hole (1621) of the U-shaped plate, the belt mounting hole (131), and the rack belt mounting hole (1631) in the rack belt (163) sequentially to mount and fix the conveyor belt (130) and the connecting member (160).

9. The unlocking device according to any one of claims 6 to 8, **characterized in that** the control system further comprises a limit sensor (180) mounted on the mounting platform (110) via a bracket (181), limit sensors (180) are provided at two extreme positions for movement of the connecting member (160), and the limit sensors (180) are connected to the driving part (20) to control the extreme positions for the movement of the connecting member (160).

10. The unlocking device according to any one of claims 6 to 9, **characterized in that** the conveyor belt tensioning device comprises:
a tensioning bracket (120) movably mounted on the mounting platform (110) and having a first end configured to mount the conveyor belt (130); and
a tension adjusting part (140) mounted at a second end of the tensioning bracket (120), elastically connected to the tensioning bracket (120), and configured to adjust tension of the conveyor belt (130);
preferably, the tensioning bracket (120) has a bottom plate (121) movably mounted on the mounting platform (110), and an end plate (122) on the other end of the bottom plate (121) away from a mounting end of the conveyor belt (130); the tension adjusting part (140) comprises a fixing plate (141), a limiting plate (142), a penetrating member (143), and an elastic member (144); the fixing plate (141) is provided outside the tensioning bracket (120) and to the mounting platform (110) at a side of the end plate (122); the limiting plate (142) is provided to the mounting platform (110) inside the tensioning bracket (120) through a limiting opening in the bottom plate (121); two ends of the penetrating member (143) are respectively fixed to the limiting plate (142) and the fixing plate (141) and penetrate the end plate (122); the elastic member (144) is provided to a part of the penetrating member (143) between the limiting plate (142) and the end plate (122) and presses the limiting plate (142) and the end plate (122) at both ends;
further preferably, the penetrating member (143) comprises a screw (1431) and a nut (1432); the screw (1431) penetrates the limiting plate (142), the end plate (122), and the fixing plate (141), and the nut (1432) is mounted at a penetrating end; the elastic member (144) is configured as a spring; and/or
the tensioning bracket (120) is provided with a side plate (123) on each of two sides of the bottom plate (121); the conveyor belt (130) has a first end mounted to the side plate (123) of the tensioning bracket (120) through a gear, and a second end connected to a drive wheel (150).

11. The unlocking device according to claim 10, **characterized in that** the bottom plate (121) of the tensioning bracket (120) is further provided with a sliding slot (1212) extending along a length of the conveyor belt (130), and a slot screw (1213) passing through the sliding slot (1212) to be mounted to the mounting platform (110), a width of a head of the slot screw (1213) being greater than a width of the sliding slot (1212).

12. The unlocking device according to any one of claims 6 to 11, **characterized in that** the moving seat (192) is provided with a snap strip (1921), and the unlocking device is inserted into a snap groove (1611) of the connecting member (160) by means of the snap strip (1921), so as to be connected to the drive control system;
preferably, the snap groove (1611) has a width extending in a horizontal direction, and the width of the snap groove (1611) is greater than a width of the snap strip (1921) to allow the snap strip (1921) to move horizontally in a width range of the snap groove (1611).

13. A lock device, comprising:
a locking mechanism comprising: a lock base and a lock connecting rod, the lock base being configured to provide a locking point and having a lock slot configured to receive a lock shaft of a battery, the lock connecting rod being movably connected with the lock base through a lock tongue, and the lock tongue having a stop block configured to prevent the lock shaft from separating from the lock slot after the lock shaft is inserted into the lock slot; and
an unlocking mechanism comprising an unlocking device according to any one of claims 1 to 12, the unlocking ejector rod (13) of the unlocking device being configured to push the lock connecting rod upwards, and the lock connecting rod causing the lock tongue to rotate in the lock base during the upward movement so as to rotate the stop block away from its locked position.

14. A battery replacement mobile platform (103), comprising:
a travel driving part (106) configured to drive the whole battery replacement mobile platform to move on the ground;
a lifting part (107) mounted on the travel driving part (106) and configured to realize rise and fall of a battery (104) during a battery replacement process; and
a battery mounting part (108) mounted on a top of the lifting part (107) and configured to place thereon a replacement battery or a replaced battery, the battery mounting part (108) having an upper surface provided with an unlocking device according to any one of claims 1 to 12 to unlock a battery locking mechanism of the electric vehicle (105) under control of the drive device.

15. A fast battery replacement system, comprising:
a battery rack (101) configured to place thereon a replacement battery of an electric vehicle (105) and a battery to be charged and removed from the electric vehicle (105);
a stacker (102) configured to put the battery to be charged into the battery rack (101) and remove the replacement battery from the battery rack (101); and
a battery replacement mobile platform (103) according to claim 14.

## Patentansprüche

1. Eine Entriegelungsvorrichtung, umfassend:
ein bewegliches Teil (40, 190) mit einer Führungsschiene (41, 191);
ein Entriegelungsteil (10, 193), das zum Entriegeln eines Verriegelungsmechanismus für ein Elektrofahrzeug (105) konfiguriert ist; und
eine Antriebsvorrichtung, die so konfiguriert ist, dass sie das Entriegelungsteil (10, 193) so antreibt, dass es sich auf der Führungsschiene (41, 191) bewegt,
wobei das Entriegelungsteil (10) eine Entriegelungsauswurfstange (13) aufweist, die auf der Führungsschiene (41) nach oben angeordnet und entlang der Führungsschiene (41) bewegbar ist;
wobei der bewegliche Teil (40) ferner einen beweglichen Sitz (42) umfasst, der an der Führungsschiene (41) angebracht und entlang der Führungsschiene (41) beweglich ist, und die Entriegelungsauswurfstange (13) an dem beweglichen Sitz (42) angeordnet ist;
wobei das Entriegelungsteil (10) ferner einen hohlen Befestigungszylinder (11) umfasst, der senkrecht auf einer oberen Fläche des beweglichen Sitzes (42) angebracht ist,
**dadurch gekennzeichnet, dass** die Entriegelungsauswurfstange (13) ein unteres Ende aufweist, das mittels eines elastischen Elements beweglich in dem Befestigungszylinder (11) angebracht ist.

2. Entriegelungsvorrichtung nach Anspruch 1, **dadurch gekennzeichnet, dass** die Antriebsvorrichtung ein mit dem Entriegelungsteil (10) verbundenes Antriebsteil (20) umfasst.

3. Entriegelungsvorrichtung nach Anspruch 2, **dadurch gekennzeichnet, dass** in einer Seitenwand des Befestigungszylinders (11) eine streifenförmige Nut (111) vorgesehen ist, die sich entlang einer axialen Richtung des Befestigungszylinders (11) erstreckt, und dass das untere Ende der Entriegelungsauswurfstange (13) mit einem Begrenzungselement (132) versehen ist, das in die streifenförmige Nut (111) eingerastet wird und entlang der streifenförmigen Nut (111) verschiebbar ist.

4. Entriegelungsvorrichtung nach Anspruch 3, **dadurch gekennzeichnet, dass** das Antriebsteil (20) über eine Schubstange (21) mit dem beweglichen Sitz (42) verbunden ist, und die Schubstange (21) als eine elektrische Schubstange, eine hydraulische Schubstange oder eine pneumatische Schubstange ausgebildet ist;
vorzugsweise ist der bewegliche Sitz (42) mit einem Gleitrillensitz (16) versehen, der eine innere Nut an einem Ende des beweglichen Sitzes (42, 192) neben der Schubstange (21) aufweist, wobei der Gleitrillensitz (16) eine Seitenwand hat, die mit einer Gleitrille (161) versehen ist, die sich entlang der Führungsschiene (41) erstreckt, und die Schubstange (21) ein Ende hat, das in der inneren Nut des Gleitrillensitzes (16) angeordnet ist, und an diesem Ende mit einem Befestigungselement versehen ist, das in die Gleitrille (161) eingerastet ist;
weiter vorzugsweise ist eine Oberfläche des beweglichen Sitzes (42) mit einer Befestigungsplatte (14) versehen, und das Entriegelungsteil (10) und der Gleitrillensitz (16) sind auf der Befestigungsplatte (14) montiert.

5. Entriegelungsvorrichtung nach einem der Ansprüche 2 bis 4, **dadurch gekennzeichnet, dass** die Entriegelungsvorrichtung ferner eine Rückführeinrichtung (30) umfasst, die mit dem Entriegelungsteil (10) verbunden ist, wobei die Rückführeinrichtung (30) so ausgebildet ist, dass sie das Entriegelungsteil (10) nach einer Bewegung entlang der Führungsschiene (41) automatisch in eine Ausgangsposition zurückführt, und die Rückführeinrichtung (30) als teleskopierbares elastisches Element ausgebildet ist; und/oder
ein Sensor, der so konfiguriert ist, dass er eine Bewegungsposition des Entriegelungsteils (10) begrenzt, an jedem Ende der Führungsschiene (41) vorgesehen ist.

6. Entriegelungsvorrichtung nach Anspruch 1, **dadurch gekennzeichnet, dass** das bewegliche Teil (190) ferner einen beweglichen Sitz (192) umfasst und das Entriegelungsteil (193) auf dem beweglichen Sitz (192) montiert ist;
die Antriebsvorrichtung ein Antriebssteuersystem umfasst und das Antriebssteuersystem über ein Verbindungselement (160) mit dem Entriegelungsteil (193) oder dem beweglichen Sitz (192) verbunden ist;
vorzugsweise umfasst das Antriebssteuerungssystem:
eine Montageplattform (110);
ein Antriebsteil (20), das auf der Montageplattform (110) montiert ist und eine aktive Antriebsbaugruppe und eine passive Antriebsbaugruppe umfasst, die einander gegenüberliegend angeordnet sind, wobei die passive Antriebsbaugruppe eine Förderband-Spannvorrichtung umfasst; und
ein Übertragungsteil, das ein Förderband (130) und das Verbindungselement (160) umfasst, wobei das Förderband (130) mit der aktiven Antriebsbaugruppe und der passiven Antriebsbaugruppe verbunden ist, wobei die aktive Antriebsbaugruppe so konfiguriert ist, dass sie das Förderband (130) so antreibt, dass es sich im Uhrzeigersinn oder gegen den Uhrzeigersinn dreht, wobei das Verbindungselement (160) an dem Förderband (130) angebracht und so konfiguriert ist, dass es ein bewegliches Element verbindet, und wobei das Förderband (130) so konfiguriert ist, dass es das bewegliche Element so antreibt, dass es sich unter dem Antrieb der aktiven Antriebsbaugruppe horizontal hin und her bewegt.

7. Entriegelungsvorrichtung nach Anspruch 6, **dadurch gekennzeichnet, dass** die aktive Antriebsbaugruppe einen Motor (151), eine Antriebswelle (152) und ein Antriebsrad (150) umfasst, wobei der Motor (151) fest an der Montageplattform (110) montiert ist, das Antriebsrad (150) mittels einer Antriebsradhalterung (153) an der Montageplattform (110) montiert ist und der Motor (151) über die Antriebswelle (152) mit dem Antriebsrad (150) verbunden ist, um das Antriebsrad (150) in Drehung zu versetzen;
vorzugsweise umfasst die passive Antriebsbaugruppe ferner ein angetriebenes Rad (170), das mittels eines Spannbügels (120) an der Montageplattform (110) angebracht ist, wobei das Förderband (130) zwei Enden aufweist, die über eine Oberfläche des Antriebsrades (150) bzw. eine Oberfläche des angetriebenen Rades (170) angebracht sind, und das Förderband (130) durch das Antriebsrad (150) und das angetriebene Rad (170) gespannt wird;
weiter bevorzugt ist der Motor (151) als Mikromotor ausgebildet, das Antriebsrad (150) und das angetriebene Rad (170) sind Synchronscheiben, das Förderband (130) hat eine mit einer Zahnstange versehene Innenfläche, und die Zahnstange greift in Flächen der Synchronscheiben ein.

8. Entriegelungsvorrichtung nach Anspruch 6, **dadurch gekennzeichnet, dass** das Verbindungselement (160) als U-förmige Platte mit gegenüberliegenden Seitenplatten (161) und einer Bodenplatte (162) zwischen den Seitenplatten (161) konfiguriert ist, eine Breite zwischen den Seitenplatten (161) größer als eine Breite des Förderbandes (130) ist, die U-förmige Platte eine nach unten gerichtete Öffnung aufweist und auf dem Förderband (130) hängend montiert ist; und die gegenüberliegenden Seitenplatten (161) der U-förmigen Platte jeweils mit einer Schnappnut (1611) versehen sind, die konfiguriert ist, um das bewegliche Element zu verbinden; vorzugsweise ist das Förderband (130) ein abnehmbares Förderband, zwei abnehmbare Enden des Förderbandes (130) sind jeweils mit einem Bandbefestigungsloch (131) versehen, die Bodenplatte (162) der U-förmigen Platte ist mit Bodenplattenbefestigungslöchern (1621) an entsprechenden Positionen versehen, und eine Schraube geht durch das Bodenplattenbefestigungsloch (1621) und das Bandbefestigungsloch (131), um die U-förmige Platte und das Förderband (130) zu verbinden und zu befestigen;
ferner vorzugsweise umfasst das Verbindungselement (160) ferner einen Zahnstangengurt (163), der auf der anderen Seite des Förderbandes (130) gegenüber der U-förmigen Platte vorgesehen ist, wobei der Zahnstangengurt (163) mit einem Zahnstangengurt-Befestigungsloch (1631) an einer entsprechenden Position zu dem Bandbefestigungsloch (131) in dem Förderband (130) versehen ist, und eine Schraube durch das Bodenplattenbefestigungsloch (1621) der U-förmigen Platte, das Bandbefestigungsloch (131) und das Zahnstangengurt-Befestigungsloch (1631) in dem Zahnstangengurt (163) nacheinander hindurchgeht, um das Förderband (130) und das Verbindungselement (160) zu befestigen und zu fixieren.

9. Entriegelungsvorrichtung nach einem der Ansprüche 6 bis 8, **dadurch gekennzeichnet, dass** das Steuersystem ferner einen Begrenzungssensor (180) umfasst, der über eine Halterung (181) an der Montageplattform (110) angebracht ist, wobei Begrenzungssensoren (180) an zwei Endpositionen für die Bewegung des Verbindungselements (160) vorgesehen sind und die Begrenzungssensoren (180) mit dem Antriebsteil (20) verbunden sind, um die Endpositionen für die Bewegung des Verbindungselements (160) zu steuern.

10. Entriegelungsvorrichtung nach einem der Ansprüche 6 bis 9, **dadurch gekennzeichnet, dass** die Förderband-Spannvorrichtung umfasst:
einen Spannbügel (120), der beweglich auf der Montageplattform (110) montiert ist und ein erstes Ende aufweist, das zur Montage des Förderbandes (130) konfiguriert ist; und
ein Spannungseinstellteil (140), das an einem zweiten Ende des Spannbügels (120) angebracht ist, elastisch mit dem Spannbügel (120) verbunden ist und konfiguriert ist, um die Spannung des Förderbandes (130) einzustellen;
vorzugsweise hat der Spannbügel (120) eine Bodenplatte (121), die beweglich auf der Montageplattform (110) montiert ist, und eine Endplatte (122) an dem anderen Ende der Bodenplatte (121), das von einem Montageende des Förderbandes (130) entfernt ist; das Spannungseinstellteil (140) eine Befestigungsplatte (141), eine Begrenzungsplatte (142), ein Durchdringungselement (143) und ein elastisches Element (144) umfasst; die Befestigungsplatte (141) außerhalb des Spannbügels (120) und an der Montageplattform (110) an einer Seite der Endplatte (122) vorgesehen ist; die Begrenzungsplatte (142) ist an der Montageplattform (110) innerhalb des Spannbügels (120) durch eine Begrenzungsöffnung in der Bodenplatte (121) vorgesehen; zwei Enden des Durchdringungselements (143) sind jeweils an der Begrenzungsplatte (142) und der Befestigungsplatte (141) befestigt und durchdringen die Endplatte (122); das elastische Element (144) ist an einem Teil des Durchdringungselements (143) zwischen der Begrenzungsplatte (142) und der Endplatte (122) vorgesehen und drückt die Begrenzungsplatte (142) und die Endplatte (122) an beiden Enden;
weiter bevorzugt umfasst das Durchdringungselement (143) eine Schraube (1431) und eine Mutter (1432); die Schraube (1431) durchdringt die Begrenzungsplatte (142), die Endplatte (122) und die Befestigungsplatte (141), und die Mutter (1432) ist an einem Durchdringungsende angebracht; das elastische Element (144) ist als Feder ausgebildet; und/oder
der Spannbügel (120) ist mit einer Seitenplatte (123) auf jeder der beiden Seiten der Bodenplatte (121) versehen; das Förderband (130) hat ein erstes Ende, das über ein Zahnrad an der Seitenplatte (123) des Spannbügels (120) befestigt ist, und ein zweites Ende, das mit einem Antriebsrad (150) verbunden ist.

11. Entriegelungsvorrichtung nach Anspruch 10, **dadurch gekennzeichnet, dass** die Bodenplatte (121) des Spannbügels (120) ferner mit einem Gleitschlitz (1212) versehen ist, der sich entlang einer Länge des Förderbandes (130) erstreckt, und mit einer Schlitzschraube (1213), die durch den Gleitschlitz (1212) hindurchgeht, um an der Montageplattform (110) befestigt zu werden, wobei eine Breite eines Kopfes der Schlitzschraube (1213) größer ist als eine Breite des Gleitschlitzes (1212).

12. Entriegelungsvorrichtung nach einem der Ansprüche 6 bis 11, **dadurch gekennzeichnet, dass** der bewegliche Sitz (192) mit einem Schnappstreifen (1921) versehen ist und die Entriegelungsvorrichtung mittels des Schnappstreifens (1921) in eine Schnappnut (1611) des Verbindungselements (160) eingesetzt wird, um mit der Antriebssteuerung verbunden zu werden; vorzugsweise hat die Schnappnut (1611) eine Breite, die sich in einer horizontalen Richtung erstreckt, und die Breite der Schnappnut (1611) ist größer als eine Breite des Schnappstreifens (1921), damit sich der Schnappstreifen (1921) horizontal in einem Breitenbereich der Schnappnut (1611) bewegen kann.

13. Eine Verriegelungsvorrichtung, bestehend aus:
einen Verriegelungsmechanismus, umfassend: eine Verriegelungsbasis und eine Verriegelungsverbindungsstange, wobei die Verriegelungsbasis so konfiguriert ist, dass sie einen Verriegelungspunkt bereitstellt, und einen Verriegelungsschlitz aufweist, der so konfiguriert ist, dass er einen Verriegelungsschaft einer Batterie aufnimmt, wobei die
Verriegelungsverbindungsstange durch eine Verriegelungszunge beweglich mit der Verriegelungsbasis verbunden ist und die Verriegelungszunge einen Anschlagblock aufweist, der so konfiguriert ist, dass er verhindert, dass sich der Verriegelungsschaft von dem Verriegelungsschlitz löst, nachdem der Verriegelungsschaft in den Verriegelungsschlitz eingeführt wurde; und
einen Entriegelungsmechanismus, der eine Entriegelungsvorrichtung nach einem der Ansprüche 1 bis 12 umfasst, wobei die Entriegelungsauswurfstange (13) der Entriegelungsvorrichtung so konfiguriert ist, dass sie die Verriegelungsverbindungsstange nach oben drückt, und die Verriegelungsverbindungsstange bewirkt, dass sich die Verriegelungszunge während der Aufwärtsbewegung in der Verriegelungsbasis dreht, um den Anschlagblock aus seiner verriegelten Position wegzudrehen.

14. Eine mobile Plattform (103) für den Batteriewechsel, umfassend:
ein Fahrantriebsteil (106), das so konfiguriert ist, dass es die gesamte mobile Plattform für den Batteriewechsel antreibt, um sich auf dem Boden zu bewegen;
ein Hebeteil (107), das an dem Fahrantriebsteil (106) angebracht und so konfiguriert ist, dass es das Anheben und Absenken einer Batterie (104) während eines Batterieaustauschvorgangs realisiert; und
ein Batteriebefestigungsteil (108), das an einer Oberseite des Hebeteils (107) angebracht und konfiguriert ist, um darauf eine Ersatzbatterie oder eine ausgetauschte Batterie zu platzieren, wobei das Batteriebefestigungsteil (108) eine obere Fläche aufweist, die mit einer Entriegelungsvorrichtung gemäß einem der Ansprüche 1 bis 12 versehen ist, um einen Batterieverriegelungsmechanismus des Elektrofahrzeugs (105) unter Steuerung der Antriebsvorrichtung zu entriegeln.

15. Ein System zum schnellen Batteriewechsel, das Folgendes umfasst:
einen Batterieträger (101), der so konfiguriert ist, dass er eine Ersatzbatterie eines Elektrofahrzeugs (105) und eine aufzuladende und aus dem Elektrofahrzeug (105) zu entfernende Batterie aufnimmt;
einen Stapler (102), der so konfiguriert ist, dass er die zu ladende Batterie in den Batterieträger (101) einlegt und die Ersatzbatterie aus dem Batterieträger (101) entfernt; und
eine mobile Plattform (103) für den Batteriewechsel nach Anspruch 14.

## Revendications

1. Dispositif de déverrouillage, comprenant :
une partie mobile (40, 190) comprenant un rail de guidage (41, 191) ;
une partie de déverrouillage (10, 193) configurée pour déverrouiller un mécanisme de verrouillage pour un véhicule électrique (105) ; et
un dispositif d'entraînement configuré pour entraîner la partie de déverrouillage (10, 193) à se déplacer sur le rail de guidage (41, 191),
dans lequel la partie de déverrouillage (10) comprend une tige d'éjection de déverrouillage (13) agencée vers le haut sur le rail de guidage (41) et mobile le long du rail de guidage (41) ;
dans lequel la partie mobile (40) comprend en outre un siège mobile (42) monté sur le rail de guidage (41) et mobile le long du rail de guidage (41), et la tige d'éjection de déverrouillage (13) est agencée sur le siège mobile (42) ;
dans lequel la partie de déverrouillage (10) comprend en outre un cylindre de fixation creux (11) monté perpendiculairement sur une surface supérieure du siège mobile (42), **caractérisé en ce que** la tige d'éjection de déverrouillage (13) présente une extrémité inférieure montée de manière mobile dans le cylindre de fixation (11) au moyen d'un élément élastique.

2. Dispositif de déverrouillage selon la revendication 1, **caractérisé en ce que** le dispositif d'entraînement comprend une partie d'entraînement (20) connectée à la partie de déverrouillage (10).

3. Dispositif de déverrouillage selon la revendication 2, **caractérisé en ce qu'**une rainure en forme de bande (111) s'étendant le long d'une direction axiale du cylindre de fixation (11) est prévue dans une paroi latérale du cylindre de fixation (11), et l'extrémité inférieure de la tige d'éjection de déverrouillage (13) est munie d'un élément de limitation (132) qui est encliqueté dans la rainure en forme de bande (111) et peut coulisser le long de la rainure en forme de bande (111).

4. Dispositif de déverrouillage selon la revendication 3, **caractérisé en ce que** la partie d'entraînement (20) est connectée au siège mobile (42) par l'intermédiaire d'une tige de poussée (21), et la tige de poussée (21) est configurée sous la forme de l'une d'une tige de poussée électrique, d'une tige de poussée hydraulique et d'une tige de poussée pneumatique ;
de préférence, le siège mobile (42) est pourvu d'un siège à rainure de coulissement (16) présentant une rainure intérieure à une extrémité du siège mobile (42, 192) adjacente à la tige de poussée (21), le siège à rainure de coulissement (16) présente une paroi latérale pourvue d'une rainure de coulissement (161) s'étendant le long du rail de guidage (41), et la tige de poussée (21) présente une extrémité située dans la rainure intérieure du siège à rainure de coulissement (16) et, au niveau de cette extrémité, est pourvue d'un élément de fixation encliqueté dans la rainure de coulissement (161) ;
en outre, de préférence, une surface du siège mobile (42) est pourvue d'une plaque de fixation (14), et la partie de déverrouillage (10) et le siège à rainure de coulissement (16) sont montés sur la plaque de fixation (14).

5. Dispositif de déverrouillage selon l'une quelconque des revendications 2 à 4, **caractérisé en ce que** le dispositif de déverrouillage comprend en outre un dispositif de retour (30) connecté à la partie de déverrouillage (10), le dispositif de retour (30) est configuré pour commander la partie de déverrouillage (10) pour qu'elle revienne automatiquement à une position d'origine après s'être déplacée le long du rail de guidage (41), et le dispositif de retour (30) est configuré sous la forme d'un élément élastique télescopique ; et/ou
un capteur configuré pour limiter une position de déplacement de la partie de déverrouillage (10) est prévu à chaque extrémité du rail de guidage (41).

6. Dispositif de déverrouillage selon la revendication 1, **caractérisé en ce que** la partie mobile (190) comprend en outre un siège mobile (192), et la partie de déverrouillage (193) est montée sur le siège mobile (192) ;
le dispositif d'entraînement comprend un système de commande d'entraînement, et le système de commande d'entraînement est connecté à la partie de déverrouillage (193) ou au siège mobile (192) par l'intermédiaire d'un élément de connexion (160) ;
le système de commande d'entraînement comprend de préférence :
une plate-forme de montage (110) ;
une partie d'entraînement (20) montée sur la plate-forme de montage (110), et
comprenant un ensemble d'entraînement actif et un ensemble d'entraînement passif agencés de manière opposée, l'ensemble d'entraînement passif comprenant un dispositif de mise en tension de courroie de transport ; et
une partie de transmission comprenant une courroie de transport (130) et l'élément de connexion (160), la courroie de transport (130) étant connectée à l'ensemble d'entraînement actif et à l'ensemble d'entraînement passif, l'ensemble d'entraînement actif étant configuré pour entraîner la courroie de transport (130) à tourner dans le sens des aiguilles d'une montre ou dans le sens inverse des aiguilles d'une montre, l'élément de connexion (160) étant monté sur la courroie de transport (130) et configuré pour connecter un élément mobile, et la courroie de transport (130) étant configurée pour entraîner l'élément mobile à se déplacer en va-et-vient horizontalement sous l'entraînement de l'ensemble d'entraînement actif.

7. Dispositif de déverrouillage selon la revendication 6, **caractérisé en ce que** l'ensemble d'entraînement actif comprend un moteur (151), un arbre d'entraînement (152) et une roue d'entraînement (150), le moteur (151) est monté de manière fixe sur la plate-forme de montage (110), la roue d'entraînement (150) est montée sur la plate-forme de montage (110) au moyen d'un support de roue d'entraînement (153), et le moteur (151) est connecté à la roue d'entraînement (150) par l'intermédiaire de l'arbre d'entraînement (152) pour actionner la roue d'entraînement (150) à tourner ;
de préférence, l'ensemble d'entraînement passif comprend en outre une roue entraînée (170) montée sur la plate-forme de montage (110) au moyen d'un support de mise en tension (120), la courroie de transport (130) présente deux extrémités montées au-dessus d'une surface de la roue d'entraînement (150) et une surface de la roue entraînée (170), respectivement, et la courroie de transport (130) est mise en tension par la roue d'entraînement (150) et la roue entraînée (170) ;
de manière plus préférée, le moteur (151) est configuré comme un micro-moteur, la roue d'entraînement (150) et la roue entraînée (170) sont des poulies synchrones, la courroie de transport (130) présente une surface interne pourvue d'une crémaillère, et la crémaillère engrène avec les surfaces des poulies synchrones.

8. Dispositif de déverrouillage selon la revendication 6, **caractérisé en ce que** l'élément de connexion (160) est configuré comme une plaque en forme de U présentant des plaques latérales (161) opposées et une plaque inférieure (162) entre les plaques latérales (161), une largeur entre les plaques latérales (161) est supérieure à une largeur de la courroie de transport (130), la plaque en forme de U présente une ouverture tournée vers le bas et est montée sur la courroie de transport (130) d'une manière suspendue ; et les plaques latérales (161) opposées de la plaque en forme de U sont chacune pourvues d'une rainure d'encliquetage (1611) configurée pour une connexion de l'élément mobile ; de préférence, la courroie de transport (130) est une courroie de transport détachable, deux extrémités détachables de la courroie de transport (130) sont chacune pourvues d'un trou de montage de courroie (131), la plaque inférieure (162) de la plaque en forme de U est pourvue de trous de montage de plaque inférieure (1621) dans des positions correspondantes, et une vis passe à travers le trou de montage de plaque inférieure (1621) et le trou de montage de courroie (131) pour connecter et fixer la plaque en forme de U et la courroie de transport (130) ;
de manière plus préférée, l'élément de connexion (160) comprend en outre une courroie à crémaillère (163) prévue sur l'autre côté de la courroie de transport (130) opposé à la plaque en forme de U, la courroie à crémaillère (163) est pourvue d'un trou de montage de courroie à crémaillère (1631) dans une position correspondante par rapport au trou de montage de courroie (131) dans la courroie de transport (130), et une vis passe à travers le trou de montage de plaque inférieure (1621) de la plaque en forme de U, le trou de montage de courroie (131), et le trou de montage de courroie à crémaillère (1631) dans la courroie à crémaillère (163) séquentiellement pour monter et fixer la courroie de transport (130) et l'élément de connexion (160).

9. Dispositif de déverrouillage selon l'une quelconque des revendications 6 à 8, **caractérisé en ce que** le système de commande comprend en outre un capteur de limite (180) monté sur la plate-forme de montage (110) via un support (181), des capteurs de limite (180) sont prévus dans deux positions extrêmes pour un déplacement de l'élément de connexion (160), et les capteurs de limite (180) sont connectés à la partie d'entraînement (20) pour commander les positions extrêmes pour le déplacement de l'élément de connexion (160).

10. Dispositif de déverrouillage selon l'une quelconque des revendications 6 à 9, **caractérisé en ce que** le dispositif de mise en tension de courroie de transport comprend :
un support de tension (120) monté mobile sur la plate-forme de montage (110) et
présentant une première extrémité configurée pour monter la courroie de transport (130) ; et
une partie de réglage de tension (140) montée à une seconde extrémité du support de mise en tension (120), reliée élastiquement au support de mise en tension (120), et
configurée pour ajuster la tension de la courroie de transport (130) ;
de préférence, le support de tension (120) présente une plaque inférieure (121) montée de manière mobile sur la plate-forme de montage (110), et une plaque d'extrémité (122) sur l'autre extrémité de la plaque inférieure (121) éloignée d'une extrémité de montage de la courroie de transport (130) ; la partie d'ajustement de tension (140) comprend une plaque de fixation (141), une plaque de limitation (142), un élément de pénétration (143) et un élément élastique (144) ; la plaque de fixation (141) est prévue à l'extérieur du support de mise en tension (120) et sur la plate-forme de montage (110) d'un côté de la plaque d'extrémité (122) ; la plaque de limitation (142) est prévue sur la plate-forme de montage (110) à l'intérieur du support de mise en tension (120) via une ouverture de limitation dans la plaque inférieure (121) ; deux extrémités de l'élément de pénétration (143) sont respectivement fixées à la plaque de limitation (142) et à la plaque de fixation (141) et pénètrent dans la plaque d'extrémité (122) ; l'élément élastique (144) est prévu sur une partie de l'élément de pénétration (143) entre la plaque de limitation (142) et la plaque d'extrémité (122) et presse la plaque de limitation (142) et la plaque d'extrémité (122) aux deux extrémités ;
de manière plus préférée, l'élément de pénétration (143) comprend une vis (1431) et un écrou (1432) ; la vis (1431) pénètre dans la plaque de limitation (142), la plaque d'extrémité (122) et la plaque de fixation (141), et l'écrou (1432) est monté au niveau d'une extrémité de pénétration ; l'élément élastique (144) est configuré comme un ressort ; et/ou
le support de mise en tension (120) est pourvu d'une plaque latérale (123) sur chacun des deux côtés de la plaque inférieure (121) ; la courroie de transport (130) présente une première extrémité montée sur la plaque latérale (123) du support de mise en tension (120) par l'intermédiaire d'un engrenage, et une seconde extrémité connectée à une roue d'entraînement (150).

11. Dispositif de déverrouillage selon la revendication 10, **caractérisé en ce que** la plaque inférieure (121) du support de mise en tension (120) est en outre pourvue d'une fente de coulissement (1212) s'étendant le long d'une longueur de la courroie de transport (130), et d'une vis à fente (1213) passant à travers la fente de coulissement (1212) pour être montée sur la plate-forme de montage (110), une largeur d'une tête de la vis à fente (1213) étant supérieure à une largeur de la fente de coulissement (1212).

12. Dispositif de déverrouillage selon l'une quelconque des revendications 6 à 11, **caractérisé en ce que** le siège mobile (192) est muni d'une bande d'encliquetage (1921), et le dispositif de déverrouillage est inséré dans une rainure d'encliquetage (1611) de l'élément de connexion (160) au moyen de la bande d'encliquetage (1921), de manière à être connecté au système de commande d'entraînement ;
de préférence, la rainure d'encliquetage (1611) présente une largeur s'étendant dans une direction horizontale, et la largeur de la rainure d'encliquetage (1611) est supérieure à une largeur de la bande d'encliquetage (1921) pour permettre à la bande d'encliquetage (1921) de se déplacer horizontalement dans une plage de largeur de la rainure d'encliquetage (1611).

13. Dispositif de verrouillage, comprenant :
un mécanisme de verrouillage comprenant : une base de verrou et une tige de connexion de verrou, la base de verrou étant configurée pour fournir un point de verrouillage et
présentant une fente de verrou configurée pour recevoir un arbre de verrou d'une batterie, la tige de connexion de verrou étant connectée de manière mobile à la base de verrou par l'intermédiaire d'une languette de verrou, et la languette de verrou présentant un bloc d'arrêt configuré pour empêcher l'arbre de verrou de se séparer de la fente de verrou après que l'arbre de verrou soit inséré dans la fente de verrou ; et
un mécanisme de déverrouillage comprenant un dispositif de déverrouillage selon l'une quelconque des revendications 1 à 12, la tige d'éjection de déverrouillage (13) du dispositif de déverrouillage étant configurée pour pousser la tige de connexion de verrou vers le haut, et la tige de connexion de verrou faisant tourner la languette de verrou dans la base de verrou pendant le déplacement vers le haut de manière à faire tourner le bloc d'arrêt à l'écart de sa position verrouillée.

14. Plate-forme mobile de remplacement de batterie (103), comprenant :
une partie d'entraînement de déplacement (106) configurée pour entraîner la plate-forme mobile de remplacement de batterie entière à se déplacer sur le sol ;
une partie de levage (107) montée sur la partie d'entraînement de déplacement (106) et
configurée pour réaliser la montée et la descente d'une batterie (104) au cours d'un processus de remplacement de batterie ; et
une partie de montage de batterie (108) montée sur une partie supérieure de la partie de levage (107) et configurée pour y placer une batterie de remplacement ou une batterie remplacée, la partie de montage de batterie (108) présentant une surface supérieure munie d'un dispositif de déverrouillage selon l'une quelconque des revendications 1 à 12 pour déverrouiller un mécanisme de verrouillage de batterie du véhicule électrique (105) sous la commande du dispositif d'entraînement.

15. Système de remplacement rapide de batterie, comprenant :
un support de batterie (101) configuré pour placer sur celui-ci une batterie de remplacement d'un véhicule électrique (105) et une batterie à charger et à retirer du véhicule électrique (105) ;
un dispositif d'empilement (102) configuré pour mettre la batterie à charger dans le support de batterie (101) et retirer la batterie de remplacement à partir du support de batterie (101) ; et
une plate-forme mobile de remplacement de batterie (103) selon la revendication 14.
